# NEUE EUROPÄISCHE PATENTSCHRIFT

(11) **EP 0 688 071 B2**
(45) Veröffentlichungstag und Bekanntmachung des Hinweises auf die Entscheidung über den Einspruch: **28.08.2013**
(45) Hinweis auf die Patenterteilung: 18.08.1999
(21) Anmeldenummer: 95810357.4
(22) Anmeldetag: 31.05.1995
(51) Int. Cl.: H02B 1/22, H02B 13/035

(54) **Metallgekapselte gasisolierte Schaltanlage**
Metal-clad gas-insulated switchgear
Appareillage de commutation blindé métallique à gaz isolant

(30) Priorität: 13.06.1994 DE 4420524
(43) Veröffentlichungstag der Anmeldung: 20.12.1995
(73) Patentinhaber: ABB Schweiz AG, 5400 Baden (CH)
(72) Erfinder: Berger, Ernst, CH-5507 Mellingen (CH); Heil, Franz, CH-5406 Baden-Rütihof (CH)
(74) Vertreter: ABB Patent Attorneys

(56) Entgegenhaltungen:
- EP-A- 0 678 954
- CH-A- 669 869
- DE-A- 2 003 076

## Beschreibung

### TECHNISCHES GEBIET

Die Erfindung geht aus von einer metallgekapselten gasisolierten Schaltanlage gemäss dem Oberbegriff des Anspruchs 1.

Eine derartige metallgekapselte gasisolierte Schaltanlage kann dem AEG-Prospekt "Gasisolierte Schaltanlagen, Baureihe B1-02, 72,5 - 145kV entnommen werden.

### STAND DER TECHNIK

Es sind einphasig metallgekapselte gasisolierte Schaltanlagen bekannt, deren Leistungsschalterpole Löschkammern aufweisen, die durch speziell ausgebildete Stützeranordnungen aus Isoliermaterial gehalten und gegen das als Metallkapselung ausgebildete Polgehäuse abgestützt werden. Jede dieser Stützeranordnungen ist vergleichsweise aufwendig und teuer herzustellen. Die Stromanschlüsse dieser Löschkammern werden in der Regel ebenfalls durch separate weitere Stützer in der Metallkapselung gehalten, wobei dieser Stützertyp als Standardbauteil an einer Vielzahl von Stellen in der gasisolierten Schaltanlage eingesetzt wird. Wegen der vergleichsweise grossen Stückzahlen lässt sich dieser Stützertyp überaus günstig herstellen.

Ferner sind die Teile der Löschkammer, die beidseitig der Unterbrechungsstelle der Löschkammer liegen, in der Regel durch ein druckfestes Isolierrohr verbunden, welches vergleichsweise aufwendig herzustellen ist.

Die Offenlegungsschrift DE-A-2 003 076 zeigt eine herkömmliche metallgekapselte gasisolierte Schaltanlage mit einem Doppelsammelschienensystem und mit einem Leistungsschalter, der pro Pol eine in ein als Metallkapselung ausgebildetes Polgehäuse eingebaute Löschkammer aufweist. Der Leistungsschalter weist einen oberen und einen unteren Stromanschluss auf. Im Innern des Polgehäuses sind Kontaktierungsbaugruppen für die Verbindung der Stromanschlüsse des Leistungsschalters mit den jeweils zugeordneten Sammelschienen bzw. Abgängen oder Einspeisungen angeordnet.

Die Patentanmeldung EP 0 678 954 A1, die als ein Dokument im Sinne des Artikels 54(3) EPÜ anzusehen ist, zeigt eine metallgekapselte gasisolierte Schaltanlage mit einem Doppelsammelschienensystem und mit einem Leistungsschalter, der pro Pol jeweils eine Polachse und eine in ein Polgehäuse eingebaute Löschkammer aufweist. Die Löschkammer ist mit einer entlang einer Verbindungsachse erstreckten, elektrisch leitenden, kraftschlüssigen Verbindung mit der jeweils zugeordneten Sammelschiene verbunden, wobei die elektrisch leitende Verbindung des unteren Stromanschlusses eine mit einem Kontaktring versehene, im Innern des Polgehäuses angeordnete Kontaktierungsbaugruppe aufweist. Dieser Kontaktring umgibt die Polachse konzentrisch und kontaktiert in seinem Innern ein mit der Löschkammer elektrisch leitend verbundenes Auspuffgehäuse.

### DARSTELLUNG DER ERFINDUNG

Die Erfindung, wie sie in dem unabhängigen Anspruch gekennzeichnet ist, löst die Aufgabe, eine metallgekapselte gasisolierte Schaltanlage zu schaffen, bei welcher die Isolation und die Befestigung der Löschkammern der Leistungsschalterpole wesentlich vereinfacht und verbilligt ist.

Mit der vorliegenden Erfindung wird eine metallgekapselte gasisolierte Schaltanlage bereitgestellt mit mindestens einem Sammelschienensystem, mit einem Leistungsschalter, der pro Pol jeweils eine Polachse und mindestens eine in ein als Metallkapselung ausgebildetes Polgehäuse eingebaute Löschkammer aufweist, mit mindestens einem oberen und mindestens einem unteren Stromanschluss pro Leistungsschalter, von denen jeder mittels eines separaten Isolators kraftschlüssig mit dem Polgehäuse verbunden ist, und mit jeweils einer entlang einer Verbindungsachse erstreckten, elektrisch leitenden, kraftschlüssigen Verbindung der spannungsführenden Löschkammer des jeweiligen Pols mit der jeweils zugeordneten Sammelschiene, wobei die elektrisch leitende Verbindung des mindestens einen unteren Stromanschlusses eine im Innern des Polgehäuses angeordnete Kontaktierungsbaugruppe aufweist, die mit einem die Polachse konzentrisch umgebenden Kontaktring versehen ist.

Bei dieser Schaltanlage kontaktiert der Kontaktring im Innern ein mit der Löschkammer elektrisch leitend verbundenes Auspuffgehäuse, weist das Auspuffgehäuse aussen einen Bund auf, stützt sich der Bund auf den Kontaktring ab und ist die Löschkammer bei der Montage als Ganzes entlang der jeweiligen Polachse von oben in das Polgehäuse einfahrbar.

In fertigungstechnisch vorteilhafter Weise kann die Löschkammer bei der Montage dieser Schaltanlage als Ganzes entlang der Polachse von oben ins Polgehäuse eingefahren und an zwei Stellen im Polgehäuse fixiert werden, zum einen am oberen Stromanschluss und zum anderen an der Kontaktierungsbaugruppe. Besonders günstig im Hinblick auf die Wirtschaftlichkeit der gasisolierten Schaltanlage wirkt es sich aus, dass die Löschkammer kraftschlüssig mit den mindestens zwei Stromanschlüssen verbunden ist, und dass die Löschkammer allein durch diese in dem als Metallkapselung ausgebildeten Polgehäuse positioniert wird. Speziell ausgebildete Stützeranordnungen aus Isoliermaterial, welche die Löschkammer halten und direkt gegen das als Metallkapselung ausgebildete Polgehäuse abstützen, sind bei der erfindungsgemässen Ausgestaltung des Leistungsschalters nicht nötig.

Die elektrisch leitende Verbindung weist eine im Innern des Polgehäuses angeordnete Kontaktierungsbaugruppe mit einem Kontaktring auf, wobei der Kontaktring die Polachse des Leistungsschalters konzentrisch umgibt. Der Kontaktring kontaktiert im Innern ein mit der Löschkammer elektrisch leitend verbundenes Auspuffgehäuse, welches aussen einen Bund aufweist, der sich auf den Kontaktring abstützt. Der Kontaktring ist bei einer Ausgestaltung der Erfindung einerseits über ein Verbindungsstück fest mit einem einen ersten Schottungsisolator durchdringenden ersten Stromanschluss verbunden und andererseits steckbar mit einem einen zweiten Schottungsisolator durchdringenden zweiten Stromanschluss. Bei einer zweiten Ausgestaltung der Erfindung sind Mittel vorgesehen, um das Auspuffgehäuse im Kontaktring zu fixieren.

Eine weitere vorteilhafte Verbilligung des Leistungsschalters ergibt sich dadurch, dass ein oberer Teil und ein unterer Teil der Löschkammer beim Einbau in das Polgehäuse lediglich mittels einer Isolierdüse zusammengehalten werden. Bedingt durch diese einfache Bauweise wird die Montage der Löschkammer etwas aufwendiger. Das üblicherweise verwendete und in der Regel teuere Löschkammerisolierrohr kann hier jedoch eingespart werden, was weitere wirtschaftliche Vorteile mit sich bringt.

Die weiteren Ausgestaltungen der Erfindung sind Gegenstände der weiteren abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 eine Seitenansicht eines Abgangsfeldes einer gasisolierten Schaltanlage,
Fig.2 eine Draufsicht auf ein Abgangsfeld einer gasisolierten Schaltanlage,
Fig.3 eine schematische Darstellung des in Fig.1 eingetragenen Schnittes A-A,
Fig.4 eine schematische Darstellung des in Fig.2 eingetragenen Schnittes B-B,
Fig.5 eine schematische Darstellung des in Fig.2 eingetragenen Schnittes B-B, allerdings ist bei diesem Abgangsfeld das linke Sammelschienensystem weggelassen worden, und
Fig.6 eine schematische Darstellung des in Fig.1 eingetragenen Schnittes A-A, wie er sich bei dem vereinfacht ausgeführten Abgangsfeld gemäss Fig.5 darstellt.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

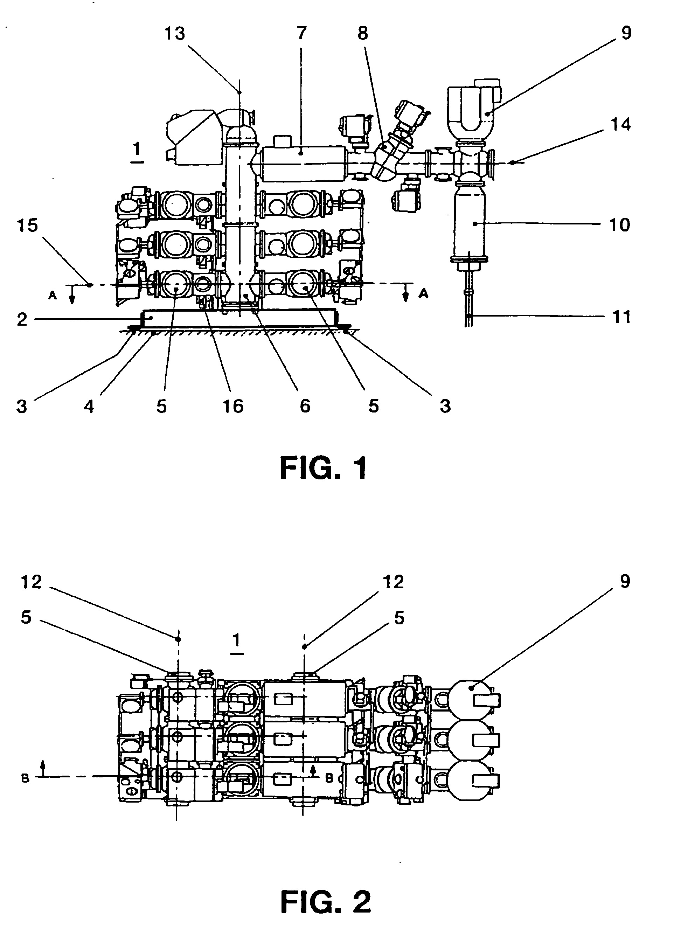

Die Fig.1 zeigt eine schematisch dargestellte Seitenansicht eines Abgangsfeldes 1 einer einphasig metallgekapselten gasisolierten Schaltanlage und die Fig.2 zeigt eine Draufsicht auf dieses Abgangsfeld 1. Dieses Abgangsfeld 1 weist einen Tragrahmen 2 auf, der aus einem Metallprofil gefertigt ist. Als besonders geeignete Metallprofile können beispielsweise I-Profile oder Rohrprofile aus Stahl eingesetzt werden. Die Rohrprofile weisen in der Regel einen runden oder einen rechteckigen Querschnitt auf. An den Ecken des Tragrahmens 2 sind Winkelprofile 3 angebracht, welche der Verbindung des Tragrahmens 2 mit einem Fundament 4 dienen.

Diese Verbindung kann kraftschlüssig ausgebildet sein, sie kann jedoch auch ein Gleiten des Tragrahmens 2 auf einer in das Fundament 4 eingelassenen und hier nicht dargestellten Tragschiene zulassen. Bei diesem Typ einer metallgekapselten und gasisolierten Schaltanlage sind die Sammelschienen 5 senkrecht übereinander an einer oder an beiden Seiten der senkrecht gestellten Pole des Leistungsschalters 6 angeordnet. Der Abgang ist mit einem Stromwandler 7 versehen, dem ein Trenner 8, der die Funktion des Abgangstrenners übernimmt, nachgeschaltet ist. Beidseits des Trenners 8 ist jeweils ein Erder vorgesehen. Nach dem Trenner 8 ist ein Spannungswandler 9 vorgesehen. Ein Kabelanschluss 10 verbindet das abgehende Hochspannungskabel 11 mit der gasisolierten Schaltanlage. Ein für eine Einspeisung vorgesehenes Feld ist ähnlich ausgebildet wie das beschriebene Abgangsfeld 1.

Die Sammelschienen 5 weisen jeweils eine Sammelschienenachse 12 auf. Die Sammelschienenachsen 12 eines jeden der beiden Sammelschienensysteme liegen in einer Ebene senkrecht übereinander. Die Pole des Leistungsschalters 6 weisen jeweils eine Polachse 13 auf. Die Polachsen 13 der drei Leistungsschalterpole liegen in einer Ebene, die senkrecht zum Fundament 4 steht. Die Ebenen in denen die Sammelschienensysteme liegen und die Ebene in der die Polachsen 13 liegen, sind bei diesem Abgangsfeld 1 parallel zueinander angeordnet. Der vom jeweiligen Leistungsschalterpol wegführende Teil des Abgangsfelds 1, der Stromwandler 7, der Trenner 8 und das Gehäuse an welches der Kabelanschluss 10 angeflanscht ist, erstreckt sich entlang einer Längsachse 14. Die Längsachse 14 steht senkrecht auf der jeweiligen Polachse 13. Der vom Leistungsschalter 6 wegführende Teil des Abgangs kann sich in die Richtung, wie in Fig.1 dargestellt, erstrecken, er kann sich jedoch auch in die entgegengesetzte Richtung erstrecken. Der obere Teil des Polgehäuses lässt sich bei der Montage entsprechend ausrichten. In der Regel wird eine Drehung um 180° um die Polachse 13 vorgenommen, es ist aber auch möglich, den oberen Teil des Polgehäuses um einen Winkel im Bereich um 180° abzudrehen. Da der Leistungsschalter 6 pro Pol mit einem separaten Antrieb versehen ist, kann jeder der drei Pole unterschiedlich ausgerichtete Abgänge aufweisen.

Bei einem Speisefeld, welches ähnlich dem Abgangsfeld 1 aufgebaut ist, und bei welchem sich entlang der jeweiligen Längsachse 14 die Einspeisung erstreckt, beispielsweise bis hin zu Durchführungen, die mit einer Freileitung verbunden sind, wirkt sich diese Möglichkeit des Drehens des oberen Teils des Polgehäuses besonders vorteilhaft aus, da auf diese Art auch in Schaltanlagen mit beengten Raumverhältnissen für die Einführung der Frei leitung hinreichende Phasenabstände einfach zu realisieren sind.

Die Verbindung von dem jeweiligen Leistungsschalterpol zu den Sammelschienen erstreckt sich entlang einer Verbindungsachse 15. Aus der Fig.1 ist ersichtlich, dass bei diesem mit einem Doppelsammelschienensystem ausgerüsteten Abgangsfeld 1 nur ein Erder 16 pro Verbindung vorgesehen ist. Bei dieser gasisolierten Schaltanlage wird einer der in diesem Bereich normalerweise nötigen zwei Erder, ohne eine Einbusse an Sicherheit und ohne die Verfügbarkeit der Anlage zu reduzieren, eingespart. Der Erder 16 kann bei einer Schaltanlage mit Doppelsammelschienensystem wahlweise entweder auf der einen oder auf der anderen Seite des Leistungsschalterpols eingebaut werden.

Wird das Schaltfeld als Kuppelfeld aufgebaut, so reicht der auf der einen Seite des Leistungsschalterpols für den Erder vorgesehene Platz aus, um das Polgehäuse mit einem Deckel druckdicht zu verschliessen, für die Sammelschiene bleibt noch genug Platz, sodass auch in einem Kuppelfeld die Sammelschienenachse 12 unverändert im Vergleich zu den Speise- und den Abgangsfeldern beibehalten werden kann.

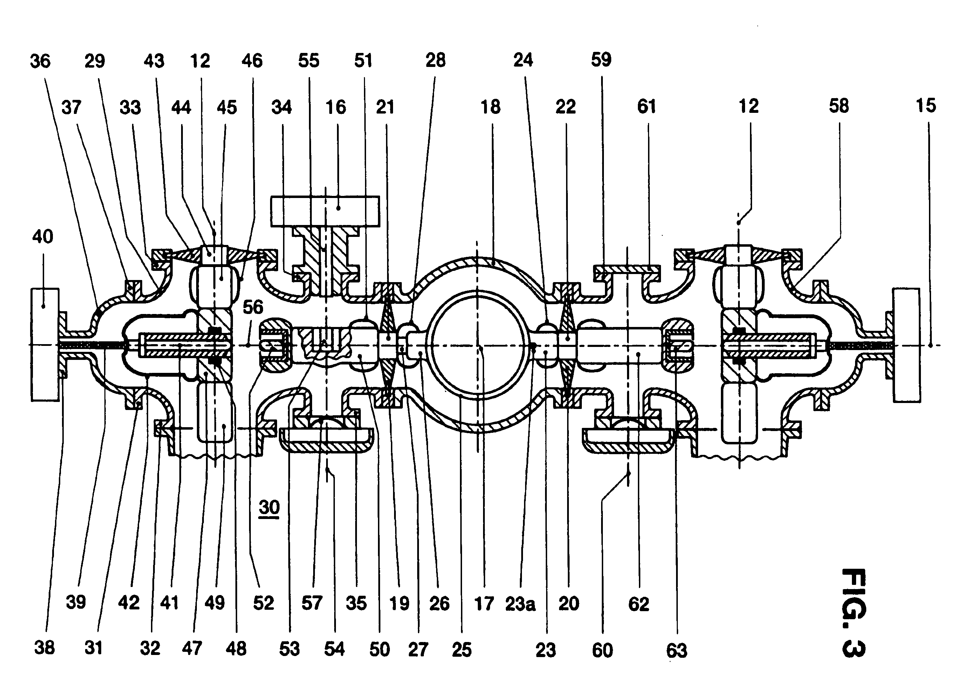

Die Fig.3 zeigt eine schematische Darstellung des in Fig.1 eingetragenen Schnittes A-A. Die Polachse 13 steht senkrecht auf der Schnittebene, sie durchstösst diese in einem zentralen Punkt 17. Ein zylindrisch ausgebildetes Gehäuseunterteil 18, welches sich entlang der Polachse 13 erstreckt, ist mit zwei auf der Verbindungsachse 15 als Zentrum liegenden, nicht bezeichneten Öffnungen versehen, die jeweils mit einem zylindrisch ausgebildeten, scheibenförmigen Schottungsisolator 19,20 druckdicht zugeflanscht sind. Grundsätzlich sind natürlich auch andere, nicht als Schottungsisolatoren ausgelegte Isolatoren an diesen Stellen einsetzbar. Der Schottungsisolator 19 weist einen ihn im Zentrum durchdringenden Stromanschluss 21 auf. Der Schottungsisolator 20 weist einen ihn im Zentrum durchdringenden Stromanschluss 22 auf. An den Stromanschluss 22 ist ein elektrisch leitendes Verbindungsstück 23 angeschraubt, welches von einer dielektrisch günstig gestalteten Abschirmung 24 umgeben ist. Das Verbindungsstück 23 ist mit einem Kontaktring 25 aus einem elektrisch gut leitfähigen Metall fest verschraubt. Das Verbindungsstück 23 und der Kontaktring 25 können auch einstückig ausgebildet sein. Der Kontaktring 25 weist auf der dem Verbindungsstück 23 gegenüberliegenden Seite eine mit ihm verschraubte Kontaktanordnung 26 auf. Der Stromanschluss 21 ist mit einem Kontaktträger 27 verbunden, der beispielsweise mit Spiralkontakten bestückt ist. Die Kontaktanordnung 26 umschliesst den Kontaktträger 27 und bildet mit ihm einen lösbaren Steckkontakt, der von einer dielektrisch günstig gestalteten Abschirmung 28 umgeben ist.

Das Zentrum des Kontaktrings 25 fällt mit dem zentralen Punkt 17 zusammen. Die zylindrisch ausgebildete Innenfläche des Kontaktrings 25 ist mit mindestens einer nicht dargestellten Nut versehen, in welche ein nicht dargestellter Kunststoffring eingeklebt ist. Der Kunststoffring führt beim Einbau der Löschkammer das elektrisch leitende Auspuffgehäuse derselben, welches aussen mit elastischen Kontaktelementen bestückt ist, beispielsweise mit Spiralkontakten, die mit dem Kontaktring 25 einen elektrischen Kontakt herstellen, und er verhindert, dass die elastischen Kontaktelemente einer unsymmetrischen mechanischen Belastung unterworfen werden. Die zentrale innere Öffnung des Kontaktrings 25 nimmt das mit der Löschkammer verbundene Auspuffgehäuse auf. Auf der dem Kontaktträger 27 entgegengesetzten Seite des Schottungsisolators 19 ist das Gehäuse 29 eines als Winkeltrenner ausgebildeten Trenners 30 druckdicht angeflanscht. In das Verbindungsstück 23 ist eine mit einer Schraube 23a versehene Gewindebohrung eingearbeitet, die auch den Kontaktring 25 durchdringt. Die Schraube 23a dient der kraftschlüssigen Verbindung des Verbindungsstücks 23, bzw. des Kontaktrings 25 mit dem Auspuffgehäuse der Löschkammer nachdem dieses in den Kontaktring 25 eingeführt worden ist.

Das vereinfacht dargestellte Gehäuse 29 des Trenners 30 weist eine Wandung aus Metall auf. In der Regel wird das Gehäuse 29 druckdicht aus einer Aluminiumlegierung gegossen. Das Gehäuse 29 weist ausser der mit dem Schottungsisolator 19 verschlossenen Öffnung fünf weitere nicht bezeichnete mit Flanschen 31 bis 35 versehene Öffnungen auf. Das Gehäuse 29 weist zudem eine Längsachse auf, welche mit der Verbindungsachse 15 zusammenfällt. Die mit dem Flansch 31 versehene Öffnung wird bei der Trennermontage mit einer metallischen Abdeckung 36 versehen, die einen Flansch 37 aufweist, der mit dem Flansch 31 gasdicht verschraubt wird. Gegenüber dem Flansch 37 ist an der Abdeckung 36 ein weiterer Flansch 38 angebracht. Der Flansch 38 dient der Befestigung einer druckfesten Durchführung für eine bei einem Schaltvorgang des Trenners 30 in Richtung einer mit der Verbindungsachse 15 zusammenfallenden Betätigungsachse bewegbaren Isolierstoffstange 39. Die Isolierstoffstange 39 bewegt, durch einen ebenfalls mit dem Flansch 38 verbundenen Trennerantrieb 40 angetrieben, die, stark schematisiert dargestellte, bewegliche Kontaktanordnung 41 des Trenners 30. Die bewegliche Kontaktanordnung 41 ist von einer dielektrisch wirksamen Abschirmung 42 umgeben, die von der Isolierstoffstange 39 durchdrungen wird.

An den Flansch 32 ist ein nicht bezeichnetes Sammelschienengehäuse angeflanscht. An den Flansch 33 ist ein Schottungsisolator 43 angeflanscht, der von einem Stromanschluss 44 durchdrungen wird. An den Stromanschluss 44 ist ein Leiterstück 45 angeschraubt, welches isolatorseitig von einer dielektrisch wirksamen Abschirmung 46 umhüllt wird. Das Leiterstück 45 erstreckt sich längs der Sammelschienenachse 12, die senkrecht zur Verbindungsachse 15 verläuft. Das Leiterstück 45 ist mit einem ersten feststehenden Kontaktträger 47 des Trenners 30 elektrisch leitend verbunden. In den Kontaktträger 47 ist ein Gleitkontakt 48 eingelassen, der für den Stromübergang von der beweglichen Kontaktanordnung 41 des Trenners 30 auf den Kontaktträger 47 vorgesehen ist. Der Gleitkontakt 48 ist konzentrisch zur Verbindungsachse 15 angeordnet, er ist mit Kontaktfingern, mit Kontaktlamellen oder mit Spiralkontakten versehen. Der Kontaktträger 47 ist konzentrisch zur Verbindungsachse 15 angeordnet. Der Kontaktträger 47 ist gleichzeitig als Teil der Sammelschienenaktivteile ausgebildet. Auf der dem Leiterstück 45 gegenüberliegenden Seite des Kontaktträgers 47 ist ein weiteres Leiterstück 49 angebracht, welches sich entlang der Sammelschienenachse 12 durch die mit dem Flansch 32 versehene Öffnung erstreckt. Der Stromanschluss 21 ist mit einem zweiten feststehenden Kontaktträger 50 des Trenners 30 elektrisch leitend verbunden. Das isolatorseitige Ende des Kontaktträgers 50 ist mit einer dielektrisch wirksamen Abschirmung 51 abgedeckt. Das dem Kontaktträger 47 zugewandte Ende des Kontaktträgers 50 ist mit einem konzentrisch zur Verbindungsachse 15 angeordneten Gegenkontakt 52 für die bewegliche Kontaktanordnung 41 des Trenners 30 versehen. Die Kontaktträger 47 und 50 sind dielektrisch günstig ausgeformt, etwaige Kanten sind abgerundet ausgeführt. Die Stromanschlüsse 44 und 21 liegen im Betrieb auf Hochspannungspotential und sind gegenüber der Metallkapselung der gasisolierten Schaltanlage isoliert.

In den Kontaktträger 50 ist zudem ein tulpenförmig ausgebildeter Gegenkontakt 53 eingelassen, der konzentrisch zu einer Einbauachse 54 angeordnet ist und der den Kontaktstift 55 des Erders 16 aufnimmt, wenn der Erder 16 geschlossen wird. Die Einbauachse 54 steht senkrecht auf der Verbindungsachse 15. Zwischen dem Kontaktträger 47 und dem Gegenkontakt 52 besteht bei offenem Trenner 30 ein Abstand 56. Dieser Abstand 56 entspricht der Trennstrecke des Trenners 30 die im Betrieb allen an dieser Stelle auftretenden betriebsbedingten Spannungsbeanspruchungen standhält.

Beim Einschalten des Trenners 30 wird durch die durch den Trennerantrieb 40 betätigte Isolierstoffstange 39 die bewegliche Kontaktanordnung 41 entlang der Verbindungsachse 15 auf den Gegenkontakt 52 zu bewegt. Eine gegebenenfalls durch Restladungen und/oder durch eine zwischen dem Kontaktträger 47 und dem Gegenkontakt 52 anliegende betriebsfrequente Spannung hervorgerufene Vorzündung zwischen der beweglichen Kontaktanordnung 41 und dem Gegenkontakt 52 wird durch den Trenner 30 einwandfrei beherrscht. Eine Ausweitung des Vorzündlichtbogens hin zur Wand des Gehäuses 29 kann, bedingt durch die geometrische Anordnung des Kontaktträgers 47 und des Gegenkontakts 52 nicht auftreten. Der Trennerantrieb 40 ist so ausgelegt, dass er in jedem möglichen Betriebsfall die bewegliche Kontaktanordnung 41 sicher in die vorgesehene Einschaltstellung bewegt, sodass eine einwandfreie Stromführung über die dafür vorgesehenen, nicht näher beschriebenen Nennstromkontakte gewährleistet ist. Ebenso erfolgt auch das Öffnen des Trenners 30 stets einwandfrei.

Hier ist der Erder 16 in die mit dem Flansch 34 versehene Öffnung eingebaut. Er könnte jedoch auch alternativ in die mit dem Flansch 35 versehene Öffnung eingebaut werden. An den Flansch 35 können beispielsweise Detektoren für die Überwachung der gasisolierten Schaltanlage oder, wie in Fig.3 gezeigt, eine Berstscheibe 57 druckdicht angeflanscht werden, die im Fehlerfall eine Druckentlastung des Gehäuses 29 ermöglicht. Die beiden Flansche 34 und 35 weisen eine gemeinsame Einbauachse 54 auf.

Das auf der anderen Seite des Gehäuseunterteils 18 angeflanschte Gehäuse 58 entspricht mit beinahe sämtlichen Einbauteilen dem Gehäuse 29, es ist lediglich spiegelbildlich zu diesem angeordnet, und es ist kein Erder eingebaut. Die mit einem Flansch 59 versehene Öffnung, in welche ein entlang einer Einbauachse 60 erstreckter Erder eingebaut werden könnte, ist mittels eines Deckels 61 druckdicht verschlossen. Ebenso ist auch der Gegenkontakt des Erders nicht eingebaut worden. Mit dem Stromanschluss 22 ist auf der dem Verbindungsstück 23 abgewandten Seite ein Kontaktträger 62 elektrisch leitend verbunden, der einen Gegenkontakt 63 des rechts angeordneten Trenners trägt. Der Einbau eines zweiten Erders ist hier nicht nötig, da der Gegenkontakt 63 und der Kontaktträger 62 stets, dank des elektrisch leitenden Kontaktrings 25, auf dem gleichen Potential liegen wie der Kontaktträger 50 und der Gegenkontakt 52, sodass es vollauf genügt, wenn diese Aktivteile bei Bedarf gemeinsam mit Hilfe des einzigen Erders 16 sicher geerdet werden.

Der Trenner 30 kann in jeder beliebigen Einbaulage eingebaut werden, die durch das Anlagenkonzept der metallgekapselten gasisolierten Schaltanlage vorgegeben wird. Der Erder 16 kann ebenfalls lageunabhängig betätigt werden, sodass auch von daher keine Einbaubeschränkungen bestehen. Der Erder 16 kann sowohl als Arbeitserder als auch als Schnellerder ausgebildet sein. Die Baugruppe Trenner 30 mit vorgeschaltetem Erder 16 ist sehr kompakt ausgeführt und beansprucht in Richtung der Verbindungsachse 15 besonders wenig Platz, sodass das Schaltfeld mit besonders kleinen Abbmessungen ausgeführt werden kann.

Die offene Trennstrecke des Trenners ist mittels SF₆ höchstzuverlässig isoliert. Der Trenner weist im geschlossenen Zustand eine optimale Nennstromtragfähigkeit, eine sehr gute Kurzschlussstromtragfähigkeit und Stossstromfestigkeit auf. Ferner weist er ein zuverlässiges Schaltvermögen bei kleinen kapazitiven Strömen auf, er beherrscht zudem das Umschalten bei einem unterbrechungslosen Sammelschienenwechsel.

Der Trenner 30 weist getrennte Kontaktsysteme für die Dauerstromführung und für den eigentlichen Schaltvorgang auf. Die Dauerstromkontakte sind einfach und zuverlässig konstruiert, sie weisen eine minimale Anzahl von Einzelteilen auf. Die Kontaktbewegung erfolgt mittels eines elektrisch betriebenen, ausserhalb des mit SF₆-Gas gefüllten Trennergehäuses angeordneten Trennerantriebs, der Trenner kann jedoch auch von Hand angetrieben werden. Eine derartige Konfiguration erleichtert die Wartungsarbeiten sehr vorteilhaft. Der Trenner 30 ist mit einer mechanisch gekoppelten Stellungsanzeige versehen, ferner kann ein Schauglas vorgesehen werden für ein Endoskop zur Kontrolle der Position der Kontakte des Trenners 30.

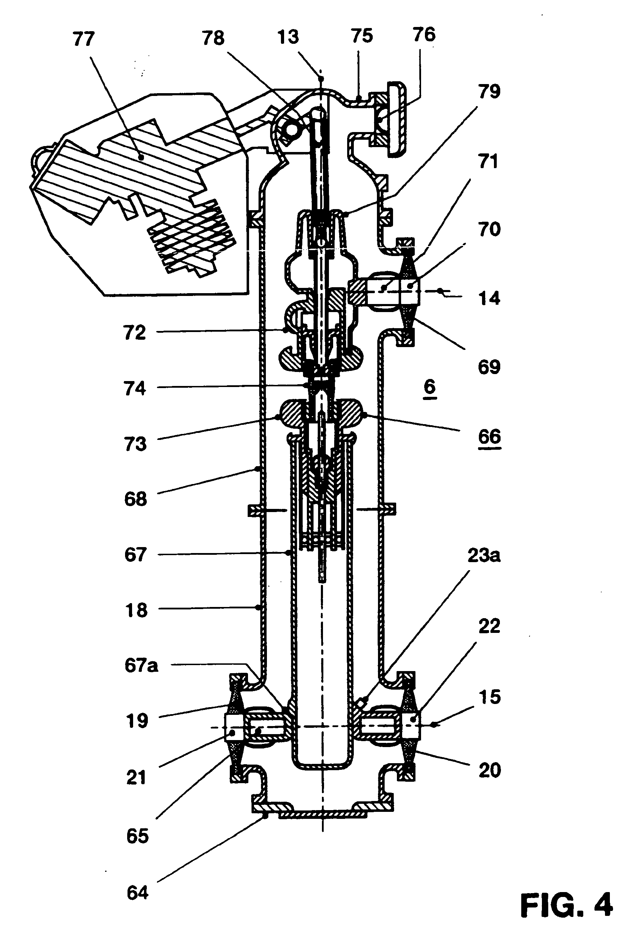

Die Fig.4 zeigt eine stark vereinfachte schematische Darstellung des in Fig.2 eingetragenen Schnittes B-B durch einen ersten Pol des Leistungsschalters 6. Dieser Pol weist ein metallisches, isoliergasgefülltes Polgehäuse auf, welches sich aus mehreren Komponenten zusammensetzt, die druckdicht miteinander verbunden sind. Das Polgehäuse weist ein unten mit einem Deckelflansch 64 verschlossenes Gehäuseunterteil 18 auf, welches bei allen drei Polen eines dreipoligen Leistungsschalters 6 gleich ausgebildet ist, welches jedoch in unterschiedlicher Einbaulage verwendet wird. In das Gehäuseunterteil 18 ist jeweils eine Kontaktierungsbaugruppe 65 eingebaut. Diese Kontaktierungsbaugruppe 65 besteht jeweils aus den im Zusammenhang mit Fig.3 beschriebenen Teilen wie dem Verbindungsstück 23 mit der Abschirmung 24, dem Kontaktring 25, der Kontaktanordnung 26 und dem Kontaktträger 27 mit der Abschirmung 28. Die Kontaktierungsbaugruppe 65 ist einerseits mit dem Stromanschluss 21 des Schottungsisolators 19 steckbar verbunden und andererseits mit dem Stromanschluss 22 des Schottungsisolators 20 fest verbunden. Der Leistungsschalterpol weist eine Löschkammer 66 auf, die ein zylindrisch ausgebildetes, aus Metall hergestelltes und konzentrisch zur Polachse 13 angeordnetes Auspuffgehäuse 67 aufweist, welches in die Kontaktierungsbaugruppe 65 eingefahren ist und mit dieser über Gleitkontakte wie beispielsweise Spiralkontakte elektrisch leitend verbunden ist. Das Auspuffgehäuse 67 überträgt das Potential der Kontaktierungsbaugruppe 65 auf den unteren Teil der Löschkammer 66 und führt bei geschlossenem Leistungsschalterpol gleichzeitig den Betriebsstrom. Das Auspuffgehäuse 67 weist im Bereich oberhalb der Kontaktierungsbaugruppe 65 einen Bund 67a auf, mit dem es sich auf den Kontaktring 25 der Kontaktierungsbaugruppe 65 abstützt. Um einen definierten Stromübergang über die Gleitkontakte sicher zu stellen, ist der Bund 67a oder der Kontaktring 25 an der Auflagestelle mit einem isolierenden Belag versehen, der einen Stromübergang an dieser Stelle verhindert. Die Kontaktierungsbaugruppe 65 trägt einen Teil des Gewichts der Löschkammer 66 und nimmt zudem die von den bewegten Kontakten der Löschkammer 66 herrührenden Reaktionskräfte auf.

Auf das Gehäuseunterteil 18 ist ein Gehäuseoberteil 68 druckdicht aufgesetzt, welches eine mit einem Schottungsisolator 69 druckdicht verschlossene, nicht bezeichnete Öffnung aufweist. Der Schottungsisolator 69 weist einen ihn durchdringenden Stromanschluss 70 auf, der einerseits mit den nicht dargestellten, sich in Richtung der Längsachse 14 erstreckenden, Aktivteilen des Abgangs elektrisch leitend verbunden ist, und der andererseits über ein Kontaktstück 71 mit dem oberen Teil 72 der Löschkammer 66 fest verbunden ist, in der Regel wird hier eine Schraubverbindung vorgesehen. Der obere Teil 72 und der untere Teil 73 der Löschkammer 66 werden durch eine Isolierdüse 74 zu einer Einheit verbunden. Die Isolierdüse 74 isoliert, wenn der Leistungsschalterpol ausgeschaltet ist, den oberen Teil 72 vom unteren Teil 73. Eine zusätzliche Verbindung des oberen Teils 72 mit dem unteren Teil 73 mittels eines Isolierrohrs ist hier nicht nötig. Die Einsparung dieses Isolierrohrs bringt wirtschaftliche Vorteile mit sich. Die Löschkammer 66 wird lediglich durch die Schraubverbindung mit dem Kontaktstück 71 und durch die Kontaktierungsbaugruppe 65 im Zentrum des Polgehäuses gehalten. Ein Gehäusedeckel 75 wird mit dem Gehäuseoberteil 68 verbunden und schliesst das Polgehäuse nach oben ab. Der Gehäusedeckel 75 ist mit einer Berstscheibe 76 versehen, die im Notfall einen im Polgehäuse entstehenden Überdruck in die Umgebung entweichen lässt. An den Gehäusedeckel 75 ist ein Antrieb 77 für den Leistungsschalterpol angeflanscht. Der Antrieb 77 sitzt nicht auf der Polachse 13, er ist neben dem Polgehäuse angeordnet, und zwar hier auf der dem Abgang zum Kabelanschluss 10 entgegengesetzten Seite des Polgehäuses. Die Bauhöhe des Leistungsschalterpols wird so durch den Antrieb 77 nicht oder nur unwesentlich vergrössert. Der Antrieb 77 wirkt über eine schematisch angedeutete Kraftumsetzung auf eine isolierende Betätigungsstange 78 ein, welche die beweglichen Kontaktteile der Löschkammer 66 entlang der Polachse 13 bewegt. An den oberen Teil 72 der Löschkammer 66 ist ein Führungsteil 79 angeformt, welches die isolierende Betätigungsstange 78 entlang der Polachse 13 führt.

Bei der Montage wird die Löschkammer 66 als Ganzes von oben her entlang der Polachse 13 in das Polgehäuse so eingeführt, dass das Auspuffgehäuse 67 mit der Kontaktierungsbaugruppe 65 einwandfrei Kontakt bekommt, und dass das Kontaktstück 71, nachdem es verschraubt ist, ebenfalls die Aktivteile des Abgangs zuverlässig mit dem oberen Teil 72 der Löschkammer 66 elektrisch verbindet. Abschliessend wird dann noch die Schraube 23a angezogen, sodass die Löschkammer 66 an zwei Stellen fixiert ist. Es sind auch andere Positionen der Polachse 13 vorstellbar, insbesondere auch, bei entsprechend ausgebildeten gasisolierten Schaltanlagen, die waagrechte Position.

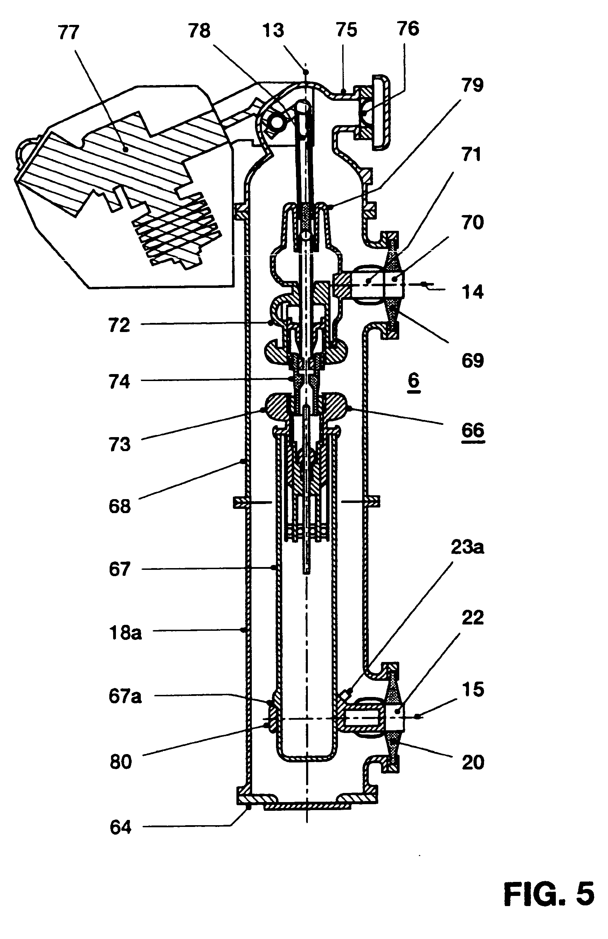

Die Fig.5 zeigt einen Schnitt durch einen Pol eines Leistungsschalters 6, der ähnlich aufgebaut ist, wie der in Fig.4 gezeigte, allerdings ist bei diesem Leistungsschalter 6 der Einbau des linken Sammelschienensystems nicht vorgesehen, was zu einer besonders wirtschaftlichen Konfiguration des Abgangsfeldes führt. Die Kontaktierungsbaugruppe 80 ist bei dieser Ausführung etwas einfacher gestaltet, da lediglich ein Sammelschienensystem mit dem Auspuffgehäuse 67 verbunden werden muss. Ferner weist das Gehäuseunterteil 18a keine Öffnung für die Kontaktierung mit einem zweiten Sammelschienensystem auf. Die übrigen Bauelemente dieses Leistungsschalters 6 sind gleich ausgebildet, wie die bereits im Zusammenhang mit Fig.4 beschrieben Teile. Eine zusätzliche Verbindung des oberen Teils 72 der Löschkammer 66 mit dem unteren Teil 73 mittels eines Isolierrohrs ist auch hier nicht nötig. Die Einsparung dieses Isolierrohrs bringt wirtschaftliche Vorteile mit sich. Die Löschkammer 66 wird lediglich durch die Schraubverbindung mit dem Kontaktstück 71 und durch die modifizierte Kontaktierungsbaugruppe 80 im Zentrum des Polgehäuses gehalten.

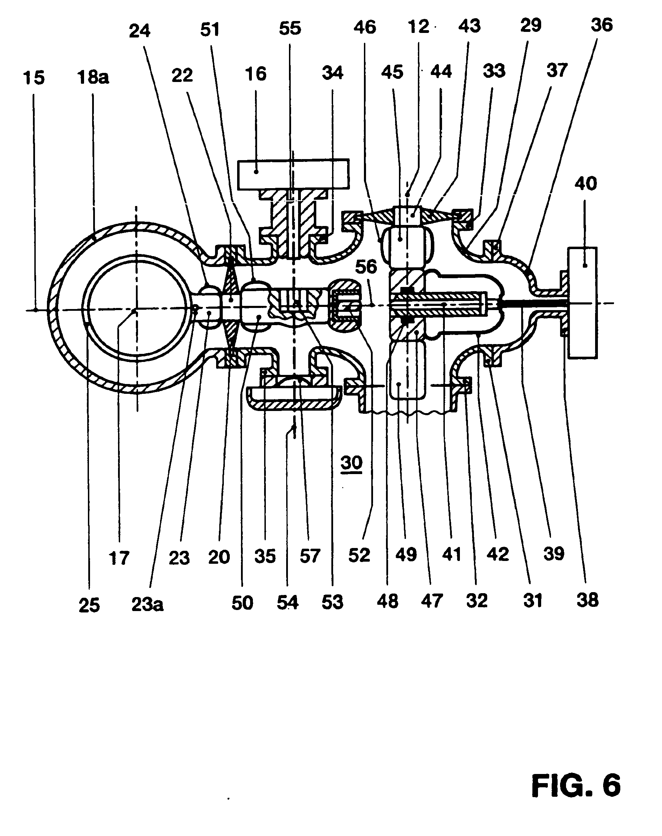

Die Fig.6 zeigt eine schematische Darstellung des in Fig.1 eingetragenen Schnittes A-A, wie er sich bei dem vereinfacht ausgeführten Abgangsfeld gemäss Fig.5 darstellt. Da hier nur das rechte Sammelschienensystem kontaktiert wird, weist das Gehäuseunterteil 18a nur eine Kontaktierungsmöglichkeit auf. der Erder 16 ist zwischen dem Leistungsschalter 6 und dem Trenner 30 angeordnet. Der Aufbau des als Winkeltrenner ausgeführten Trenners 30 wurde bereits im Zusammenhang mit der in Fig.3 dargestellten Ausführungsvariante beschrieben. Auch hier ist in das Verbindungsstück 23 eine mit einer Schraube 23a versehene Gewindebohrung eingearbeitet, die auch den Kontaktring 25 durchdringt. Die Schraube 23a dient der kraftschlüssigen Verbindung des Verbindungsstücks 23, bzw. des Kontaktrings 25, mit dem Auspuffgehäuse der Löschkammer, nachdem dieses in den Kontaktring 25 eingeführt worden ist.

Bei der erfindungsgemässen metallgekapselten gasisolierten Schaltanlage sind die Polachsen 13 in einer Ebene angeordnet. Die Polachsen 13 verlaufen hier senkrecht zum Fundament 4. Die Sammelschienenachsen 12 eines Sammelschienensystems sind ebenfalls in einer Ebene senkrecht zum Fundament 4 angeordnet, doch verlaufen die Sammelschienenachsen 12 parallel zu der Oberfläche des Fundaments 4. Wird eine gasisolierte Schaltanlage mit nur einem Sammelschienensystem erstellt, wie dies mit der Leistungsschalterausführung gemäss Fig.5 möglich ist, so kann dieses wahlweise auf der einen oder auf der anderen Seite der Ebene der Polachsen 13 des Leistungsschalters 6 angeordnet werden, wenn das Gehäuseunterteil 18a entsprechend um 180° um die Polachse 13 verdreht wird. Für spezielle Anwendungsfälle ist es auch möglich, nur eine der Sammelschienen des Systems auf der gegenüberliegenden Seite der Ebene der Polachsen 13 zu führen. Wird die gasisolierte Schaltanlage mit einem Doppelsammelschienensystem sammelschienensystem ausgerüstet, so werden die in der Regel zu beiden Seiten der Ebene der Polachsen 13 des Leistungsschalters 6 und in gleichem Abstand zu dieser angeordnet. Durch diese Zuordnung der Sammelschienen 5 in zu den Polachsen 13 der Leistungsschalter 6 parallele Ebenen ist eine besonders platzsparende Anordnung der Sammelschienenanschlüsse möglich, sie können auf einer Diagonalen angeordnet werden.

Eine besonders kompakte Anordnung der gasisolierten Schaltanlage ergibt sich dann, wenn der Abstand zwischen benachbarten Sammelschienenachsen 12, genau gleich gross wie der Abstand zwischen benachbarten Polachsen 13 gewählt wird.

### BEZEICHNUNGSLISTE

- 1: Abgangs feld
- 2: Tragrahmen
- 3: Winkelprofile
- 4: Fundament
- 5: Sammelschienen
- 6: Leistungsschalter
- 7: Stromwandler
- 8: Trenner
- 9: Spannungswandler
- 10: Kabelanschluss
- 11: Hochspannungskabel
- 12: Sammelschienenachsen
- 13: Polachse
- 14: Längsachse
- 15: Verbindungsachse
- 16: Erder
- 17: zentraler Punkt
- 18: Gehäuseunterteil
- 18a: Gehäuseunterteil
- 19,20: Schottungsisolator
- 21,22: Stromanschluss
- 23: Verbindungsstück
- 23a: Schraube
- 24: Abschirmung
- 25: Kontaktring
- 26: Kontaktanordnung
- 27: Kontaktträger
- 28: Abschirmung 28
- 29: Gehäuse
- 30: Trenner
- 31 bis 35: Flansch
- 36: Abdeckung
- 37,38: Flansch
- 39: Isolierstoffstange
- 40: Trennerantrieb
- 41: bewegliche Kontaktanordnung
- 42: Abschirmung
- 43: Schottungsisolator
- 44: Stromanschluss
- 45: Leiterstück
- 46: Abschirmung
- 47: Kontaktträger
- 48: Gleitkontakt
- 49: Leiterstück
- 50: Kontaktträger
- 51: Abschirmung
- 52,53: Gegenkontakt
- 54: Einbauachse
- 55: Kontaktstift
- 56: Abstand
- 57: Berstscheibe
- 58: Gehäuse
- 59: Flansch
- 60: Einbauachse
- 61: Deckel
- 62: Kontaktträger
- 63: Gegenkontakt
- 64: Deckelflansch
- 65: Kontaktierungsbaugruppe
- 66: Löschkammer
- 67: Auspuffgehäuse
- 67a: Bund
- 68: Gehäuseoberteil
- 69: Schottungsisolator
- 70: Stromanschluss
- 71: Kontaktstück
- 72: oberer Teil
- 73: unterer Teil
- 74: Isolierdüse
- 75: Gehäusedeckel
- 76: Berstscheibe
- 77: Antrieb
- 78: Betätigungsstange
- 79: Führungsteil
- 80: Kontaktierungsbaugruppe

## Patentansprüche

1. Metallgekapselte gasisolierte Schaltanlage mit mindestens einem Sammelschienensystem, mit einem Leistungsschalter (6), der pro Pol jeweils eine Polachse (13) und mindestens eine in ein als Metallkapselung ausgebildetes Polgehäuse (18, 18a, 68) eingebaute Löschkammer (66) aufweist, mit mindestens einem oberen (70) und mindestens einem unteren Stromanschluss (21, 22) pro Leistungsschalter (6), von denen jeder mittels eines separaten Isolators (19, 20, 69) kraftschlüssig mit dem Polgehäuse (18, 18a, 68) verbunden ist, und mit jeweils einer entlang einer Verbindungsachse (15) erstreckten, elektrisch leitenden, kraftschlüssigen Verbindung der spannungsführenden Löschkammer (66) des jeweiligen Pols mit der jeweils zugeordneten Sammelschiene (5), wobei die elektrisch leitende Verbindung des mindestens einen unteren Stromanschlusses (21, 22) eine im Innern des Polgehäuses (18, 18a, 68) angeordnete Kontaktierungsbaugruppe (65, 80) aufweist, die mit einem die Polachse (13) konzentrisch umgebenden Kontaktring (25) versehen ist, **dadurch gekennzeichnet,**
- **dass** der Kontaktring (25) im Innern ein mit der Löschkammer (66) elektrisch leitend verbundenes Auspuffgehäuse (67) kontaktiert,
- **dass** das Auspuffgehäuse (67) aussen einen Bund (67a) aufweist,
- **dass** der Bund (67a) sich auf den Kontaktring (25) abstützt, und
- **dass** die Löschkammer (66) bei der Montage als Ganzes entlang der jeweiligen Polachse (13) von oben in das Polgehäuse (18, 18a, 68) einfahrbar ist.

2. Metallgekapselte gasisolierte Schaltanlage nach Anspruch 1, **dadurch gekennzeichnet**,
- dass der Kontaktring (25) einerseits über ein Verbindungsstück (23) fest mit einem einen ersten Schottungsisolator (20) durchdringenden ersten Stromanschluss (22) verbunden ist, und
- dass der Kontaktring (25) andererseits steckbar mit einem einen zweiten Schottungsisolator (19) durchdringenden zweiten Stromanschluss (21) verbunden ist.

3. Metallgekapselte gasisolierte Schaltanlage nach Anspruch 1, **dadurch gekennzeichnet**,
- dass Mittel vorgesehen sind, um das Auspuffgehäuse (67) im Kontaktring (25) zu fixieren.

4. Metallgekapselte gasisolierte Schaltanlage nach Anspruch 1, **dadurch gekennzeichnet**,
- dass der obere Stromanschluss (70) der Löschkammer (66) ein Kontaktstück (71) aufweist, welches kraftschlüssig mit einem oberen Teil (72) der Löschkammer (66) verbunden ist.

5. Metallgekapselte gasisolierte Schaltanlage nach Anspruch 1, **dadurch gekennzeichnet**,
- dass die Polachsen (13) senkrecht zu einem Fundament (4) angeordnet sind, und
- dass die Löschkammer (66) entlang der jeweiligen Polachse (13) nach oben aus dem Polgehäuse ausfahrbar gestaltet ist.

6. Metallgekapselte gasisolierte Schaltanlage nach Anspruch 1, **dadurch gekennzeichnet**,
- dass ein oberer Teil (72) und ein unterer Teil (73) der Löschkammer (66) mittels einer Isolierdüse (74) zusammengehalten sind.

7. Metallgekapselte gasisolierte Schaltanlage nach Anspruch 1, **dadurch gekennzeichnet**,
- dass Mittel vorgesehen sind, um den Bund (67a) vom Kontaktring (25) elektrisch zu isolieren.

## Claims

1. Metal-enclosed gas-filled switchgear unit having at least one busbar system having a circuit breaker (6) which respectively has per pole one pole axis (13) and at least one arcing chamber (66) built into a pole housing (18, 18a, 68) constructed as a metal enclosure,
having at least one upper (70) and at least one lower current terminal (21, 22) per circuit breaker (6), of which each is connected in a force-closed fashion by means of a separate insulator (19, 20, 69) to the pole housing (18, 18a, 68), and having in each case an electrically conductive,
force-closed connection, extending along a connecting axis (15), between the live arcing chamber (66) of the respective pole and the respectively assigned busbar (5), the electrically conductive connection of the at least one lower current terminal (21, 22) having a contact subassembly (65, 80) which is arranged in the interior of the pole housing (18, 18a, 68) which is provided with a contact ring (25) which concentrically surrounds the pole axis (13), **characterized**
- **in that** the contact ring (25) in the interior contacts an exhaust housing (67) which is connected in an electrically conductive fashion to the arcing chamber (66),
- **in that** the exhaust housing (67) has on the outside a collar (67a),
- **in that** the collar (67a) is supported on the contact ring (25), and
- **in that**, during assembly, the arcing chamber (66) can be inserted as a whole into the pole housing (18, 18a, 68) from above along the respective pole axis (13).

2. Metal-enclosed gas-filled switchgear unit according to Claim 1, **characterized in that**
- on the one hand, the contact ring (25) is permanently connected via a connecting piece (23) to a first current terminal (22) penetrating a first partition insulator (20), and
- on the other hand, the contact ring (25) is pluggably connected to a second current terminal (21) penetrating a second partition insulator (19).

3. Metal-enclosed gas-filled switchgear unit according to Claim 1, **characterized in that**
- means are provided for fixing the exhaust housing (67) in the contact ring (25).

4. Metal-enclosed gas-filled switchgear unit according to Claim 1, **characterized in that**
- the upper current terminal (70) of the arcing chamber (66) has a contact piece (71) which is connected in a force-closed fashion to an upper part (72) of the arcing chamber (66).

5. Metal-enclosed gas-filled switchgear unit according to Claim 1, **characterized in that**
- the pole axes (13) are arranged perpendicular to a foundation (4), and
- the arcing chamber (66) is configured in a fashion capable of being withdrawn upwards out of the pole housing along the respective pole axis (13).

6. Metal-enclosed gas-filled switchgear unit according to Claim 1, **characterized in that**
- an upper part (72) and a lower part (73) of the arcing chamber (66) are held together by means of an insulating nozzle (74).

7. Metal-enclosed gas-filled switchgear unit according to Claim 1, **characterized in that**
- means are provided for electrically insulating the collar (67a) from the contact ring (25).

## Revendications

1. Appareillage de commutation à blindage métallique fermé et à gaz isolant avec au moins un système de barres collectrices, avec un disjoncteur de puissance (6), qui présente par pôle chaque fois un axe de pôle (13) et au moins une chambre de soufflage (66) incorporée dans une carcasse polaire (18, 18a, 68) constituant un blindage métallique fermé, avec au moins un raccord électrique supérieur (70) et.au moins un raccord électrique inférieur (21, 22) par disjoncteur de puissance (6), dont chacun est calé par force dans la carcasse polaire (18, 18a, 68) au moyen d'un isolateur (19, 20, 69) séparé, et avec chaque fois un assemblage bloqué, électriquement conducteur, s'étendant le long d'un axe d'assemblage (15), de la chambre de soufflage sous tension (66) du pôle respectif avec la barre collectrice (5) respectivement associée, dans lequel l'assemblage électriquement conducteur du au moins un raccord électrique inférieur (21, 22) présente un groupe de contact (65, 80) disposé à l'intérieur de la carcasse polaire (18, 18a, 68) qui est pourvu d'une bague de contact (25) qui entoure concentriquement l'axe de pôle (13)
- en ce que la bague de contact (25) vient en contact à l'intérieur avec un boîtier d'échappement (67) en liaison électriquement conductrice avec la chambre de soufflage (66),
- en ce que le boîtier d'échappement (67) présente extérieurement un bourrelet (67a),
- en ce que le bourrelet (67a) prend appui sur la bague de contact (25), et
- en ce que, lors de l'assemblage, la chambre de soufflage (66) peut être insérée dans son ensemble dans la carcasse polaire (18, 18a, 68) depuis le haut le long de l'axe de pôle (13) respectif.

2. Appareillage de commutation à blindage métallique fermé et à gaz isolant suivant la revendication 1, **caractérisé en ce que** la bague de contact (25) est d'une part reliée de manière fixe par une pièce de liaison (23) à un premier raccord électrique (22) traversant un premier isolateur de séparation étanche (20), et **en ce que** la bague de contact (25) est d'autre part reliée de manière enfichable à un second raccord électrique (21) traversant un second isolateur de séparation étanche (19),

3. Appareillage de commutation à blindage métallique fermé et à gaz isolant suivant la revendication 1, **caractérisé en ce qu'**il est prévu des moyens pour fixer le canal d'échappement (67) dans la bague de contact (25).

4. Appareillage de commutation à blindage métallique fermé et à gaz isolant suivant la revendication 1, **caractérisé en ce que** le raccord électrique supérieur (70) de la chambre de soufflage (66) présente une pièce de contact (71), qui est fixée par force à une partie supérieure (72) de la chambre de soufflage (66).

5. Appareillage de commutation à blindage métallique fermé et à gaz isolant suivant la revendication 1, **caractérisé en ce que** les axes de pôle (13) sont disposés perpendiculairement à une fondation (4), et **en ce que** la chambre de soufflage (66) peut être extraite vers le haut hors de la carcasse polaire le long de l'axe de pôle (13) respectif.

6. Appareillage de commutation à blindage métallique fermé et à gaz isolant suivant la revendication 1, **caractérisé en ce qu'**une partie supérieure (72) et une partie inférieure (73) de la chambre de soufflage (66) sont maintenues ensemble au moyen d'une douille isolante (74).

7. Appareillage de commutation à blindage métallique fermé et à gaz isolant suivant la revendication 1, **caractérisé en ce qu'**il est prévu des moyens, pour isoler électriquement le bourrelet (67a) de la bague de contact (25).
